# FASCICULE DE BREVET EUROPEEN

(11) **EP 2 917 322 B1**
(45) Date de publication et mention de la délivrance du brevet: **30.11.2016**
(21) Numéro de dépôt: 13803125.7
(22) Date de dépôt: 08.11.2013
(51) Int. Cl.: C12G 1/028, F25B 27/02, F25B 30/02

(54) **SYSTÈME THERMODYNAMIQUE OPTIMISÉ POUR LA THERMOVINIFICATION**
OPTIMIERTES THERMODYNAMISCHES SYSTEM FÜR THERMOWEINBEREITUNG
OPTIMIZED THERMODYNAMIC SYSTEM FOR THERMOVINIFICATION

(30) Priorité: 08.11.2012 FR 1203001
(43) Date de publication de la demande: 16.09.2015
(73) Titulaire: Acel Energies, 81600 Sénouillac (FR)
(72) Inventeur: LACOMBE, Aristide, F-81600 Sénouillac (FR)
(74) Mandataire: Cabinet Morelle & Bardou SC
(86) Numéro de dépôt international: PCT/FR2013/052693
(87) Numéro de publication internationale: WO 2014/072659

(56) Documents cités:
- FR-A- 1 600 478
- FR-A1- 2 570 389
- FR-A1- 2 811 068
- FR-A1- 2 811 069
- FR-A2- 2 483 864
- US-A- 4 593 611

## Description

La présente invention concerne un système thermodynamique optimisé pour la thermovinification.

Le domaine de la présente invention est donc celui de la vinification et concerne aussi bien la fabrication de vins rouges que de vins blancs et rosés. Lors de ces fabrications, il y des étapes qui nécessitent un apport de chaleur tandis que d'autres étapes prévoient un refroidissement de la préparation qui va donner du vin.

La thermovinification est un procédé qui est de plus en plus utilisé, pour la vinification notamment des vins rouges mais aussi éventuellement des vins blancs, et qui prévoit le chauffage d'une vendange puis son refroidissement. Cette technique permet de gérer de grandes quantités de raisins lors des vendanges et améliorer la qualité des vins en contrôlant mieux les réactions au sein du moût de raisin obtenu après pressage de la vendange. La thermovinification permet notamment de favoriser l'extraction de polyphénols et de détruire par ailleurs les arômes végétaux du raisin, les bactéries brettanomyces et les levures indigènes.

Le document FR-2 811 069 décrit un dispositif de refroidissement/réchauffage de moût au moyen d'une pompe à chaleur comprenant au moins deux échangeurs en mesure d'être traversés par le moût, un évaporateur/condenseur ainsi que des moyens de commutation entre les échangeurs et l'évaporateur/condenseur.

La présente invention a pour but d'améliorer un tel dispositif et de proposer un système permettant de limiter la consommation énergétique lors de la fabrication de vins. Un but de la présente invention est aussi d'optimiser les flux énergétiques de manière par exemple à pouvoir récupérer des calories lors d'un refroidissement pour s'en servir dans une étape de chauffage.

À cet effet, la présente invention propose un système thermodynamique pour une thermovinification pour permettre d'un côté le refroidissement d'une première composition obtenue à partir de raisins et d'un autre côté le réchauffement d'une seconde composition obtenue à partir de raisins, ledit système comportant un premier échangeur permettant de refroidir la première composition et un deuxième échangeur permettant de réchauffer la seconde composition.

Selon la présente invention, ce système comporte en outre :
- un premier circuit de fluide frigorigène comportant un détendeur et un compresseur et alimentant le premier échangeur,
- un second circuit de fluide frigorigène distinct du premier circuit comportant un détendeur et un compresseur et alimentant le deuxième échangeur, et
- un troisième échangeur thermique entre le premier circuit et le second circuit.

Ce système permet ainsi dans une même manipulation de refroidir d'un côté un liquide alimentaire, par exemple du raisin et/ou du jus de raisin et/ou de l'eau et de chauffer une autre quantité de produit alimentaire, par exemple du raisin vendangé, en récupérant les calories cédées lors du refroidissement.

Pour un meilleur rendement du système selon la présente invention, le fluide frigorigène circulant dans le premier circuit est de nature différente du fluide frigorigène circulant dans le second circuit. Les plages de températures dans les deux circuits étant différentes, le fait de prévoir des fluides distincts permet une optimisation du système.

Dans le cas où l'on souhaite refroidir rapidement une grande quantité de matière, le système thermodynamique selon l'invention peut être tel que le premier circuit alimente le premier échangeur par l'intermédiaire d'un quatrième échangeur et d'un circuit d'eau. Le circuit d'eau, en fonction de la quantité d'eau qu'il contient, peut constituer une réserve de froid, rapidement disponible. Pour augmenter la quantité d'eau, et donc de froid, disponible, un réservoir de taille adaptée (et bien sûr isolé thermiquement de préférence) peut être prévu dans le circuit.

De même, lorsque des besoins pour disposer d'une grande quantité de chaleur existent, le système thermodynamique selon l'invention peut être tel que le second circuit alimente le deuxième échangeur par l'intermédiaire d'un cinquième échangeur et d'un circuit d'eau. Ce circuit d'eau (chaude) peut alors lui aussi, selon les besoins, intégrer une réserve d'eau chaude.

Bien entendu, on peut prévoir en option, selon les besoins, un échangeur et un circuit intermédiaire d'eau (ou avec un autre fluide frigorigène, liquide de préférence pour pouvoir emmagasiner plus d'énergie) au niveau du premier échangeur et/ou au niveau du deuxième échangeur.

Afin de rendre le système plus flexible afin de multiplier les sources d'énergie et/ou les moyens de consommer l'énergie, on peut prévoir par exemple que :
- le premier circuit de fluide frigorigène alimente également un sixième échangeur thermique destiné à la production d'eau glacée, et/ou
- le premier circuit de fluide frigorigène alimente également un évaporateur sur air extérieur, et/ou
- le second circuit de fluide frigorigène alimente également un septième échangeur thermique destiné à la production d'eau chaude, ce septième échangeur thermique étant par exemple un échangeur à plaques, et/ou
- le second circuit de fluide frigorigène alimente également un aérocondenseur, et/ou
- le système comporte un ballon tampon pour le stockage d'eau froide et/ou d'eau chaude.

Avantageusement, le premier échangeur est un échangeur tubulaire à détente directe car il est particulièrement bien adapté à la (thermo)vinification. De même, le deuxième échangeur est lui aussi de préférence un échangeur tubulaire à condensation directe.

Un système thermodynamique selon l'invention, lorsqu'il comporte un sixième échangeur tel que décrit plus haut, peut être adapté pour gérer thermodynamiquement un dispositif connu sous le nom de "flash détente" et mettant en oeuvre un procédé tel que décrit dans le document FR-2 712 147. Le système thermodynamique selon l'invention comporte alors avantageusement en outre un dispositif permettant de mettre sous vide une composition obtenue à base de raisins pour provoquer une vaporisation partielle de ladite composition ; ledit dispositif de mise sous vide est alors alimenté par exemple par le deuxième échangeur et le système comporte en outre un condenseur pour la condensation des vapeurs obtenues par vaporisation, ledit condenseur pouvant être relié au sixième échangeur.

Pour optimiser le rendement du système, le premier circuit et le second circuit peuvent comporter chacun un échangeur secondaire.

Enfin, la présente invention propose un procédé de vinification dans lequel des quantités de raisins vendangés arrivent dans un chai ou similaire, puis sont éventuellement égrappées et/ou foulées, puis chauffées pour ensuite macérer à chaud avant d'être refroidies rapidement.

Selon l'invention le chauffage et le refroidissement de quantités de raisins sont réalisés avec un système thermodynamique tel que décrit ci-dessus, et le chauffage d'au moins une quantité de raisins est réalisé pendant le refroidissement d'une autre quantité de raisins arrivée plus tôt dans le chai avec des calories récupérées par le refroidissement de ladite quantité de raisin.

Des détails et avantages de la présente invention apparaitront mieux de la description qui suit, faite en référence au dessin schématique annexé sur lequel :
La figure 1 est une vue schématique de principe d'un premier mode de réalisation d'un système thermodynamique selon la présente invention,
La figure 2 est une variante de réalisation du premier mode de réalisation de la figure 1,
La figure 3 est une vue schématique de principe d'un second mode de réalisation d'un système thermodynamique selon la présente invention, et
La figure 4 est une variante de réalisation du second mode de réalisation de la figure 3 dans une application mettant en oeuvre un procédé de flash détente.

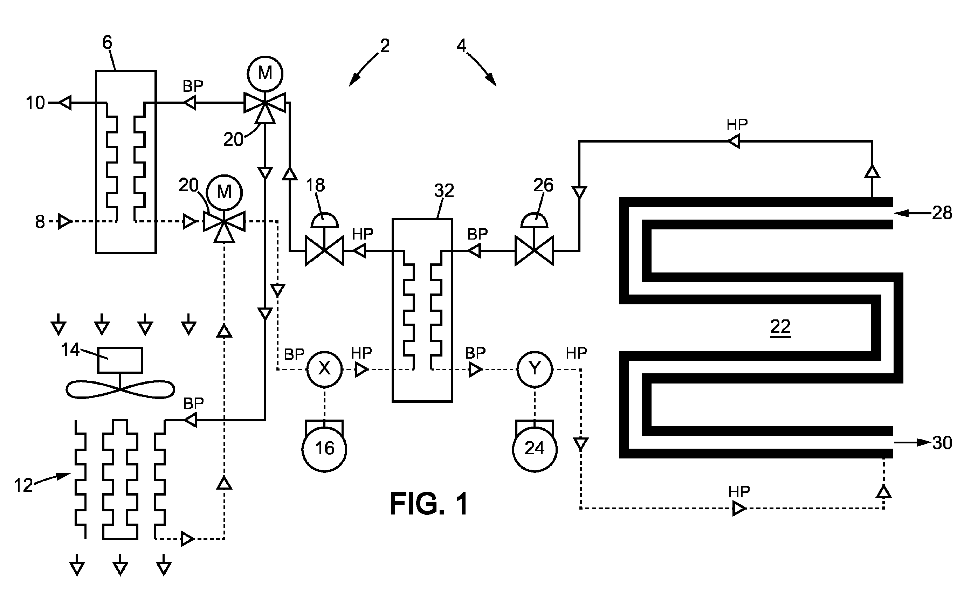

Le système thermodynamique représenté sur la figure 1 comporte un premier circuit 2 et un second circuit 4, chaque circuit correspondant à la circulation d'un fluide et le fluide du premier circuit 2 ne se mélange pas au fluide du second circuit 4, ni l'inverse. Dans chaque circuit, le fluide peut se présenter sous l'état gazeux ou bien liquide. Lorsque le fluide est majoritairement gazeux, le circuit correspondant est illustré sur la figure 1 par un trait pointillé tandis que le circuit est en trait plein dans ses portions destinées à contenir un fluide majoritairement sous phase liquide. Le fluide utilisé dans le premier circuit 2 peut être le même que celui utilisé dans le second circuit 4 mais il s'agit de préférence de fluides frigorigènes différents. À titre d'exemple non limitatif et purement illustratif, on peut choisir d'avoir par exemple de l'ammoniaque comme le R717 dans le premier circuit 2 tandis que le fluide utilisé dans le second circuit 4 sera par exemple de l'iso-butane comme le R600.

Le premier circuit 2 comporte un premier échangeur 6 utilisé pour refroidir un liquide alimentaire rentrant par une première entrée 8 et sortant refroidi par une première sortie 10. Le liquide alimentaire est par exemple du jus de raisin, plus ou moins fermenté. Le premier échangeur 6 est par exemple un échangeur de type échangeur à plaques. Il est traversé par le fluide du premier circuit 2 dans un sens de circulation sensiblement inverse au sens de circulation du liquide alimentaire entrant par la première entrée 8. Le fluide du premier circuit 2 arrive sous forme liquide à basse pression (BP) dans le premier échangeur 6 et est vaporisé au moins partiellement en sortie de cet échangeur grâce à l'apport de calories du liquide alimentaire.

Le premier circuit 2 comporte en outre un aéroévaporateur 12 dans la forme de réalisation représentée sur la figure 1. Cet aéroévaporateur 12 permet de venir assister si nécessaire le premier échangeur 6 dans le cas où celui-ci n'arriverait pas seul à évaporer suffisamment de fluide frigorigène. Il permet de réaliser un échange avec l'extérieur. Un motoventilateur 14 contraint de l'air extérieur à circuler dans l'aéroévaporateur 12 afin de provoquer l'évaporation au moins partielle du fluide frigorigène du premier circuit 2 qui entre dans l'aéroévaporateur 12.

On remarque sur la figure 1 également sur le premier circuit 2 la présence d'un premier compresseur 16 et d'un premier détendeur 18. Le premier compresseur 16 vient comprimer le fluide frigorigène, au moins partiellement à l'état gazeux, qui sort du premier échangeur 6 et/ou de l'aéroévaporateur 12. Le premier détendeur 18 permet quand à lui d'alimenter en liquide basse pression le premier échangeur 6 et/ou l'aéroévaporateur 12. À chaque fois, une vanne trois voies 20 est utilisée pour commander la répartition du fluide frigorigène dans le premier circuit 2 entre le premier échangeur 6 et l'aéroévaporateur 12. Comme suggéré par la lettre M sur la figure 1, ces vannes trois voies 20 sont de préférence motorisées et commandées par un système électronique de commande et de régulation non représenté.

Le second circuit 4 est, dans cette forme de réalisation, plus simple que le premier circuit 2 puisqu'il comporte essentiellement un deuxième échangeur 22, un second compresseur 24 et un second détendeur 26.

Le deuxième échangeur 22 est par exemple un échangeur à plaques ou bien un échangeur tubulaire à condensation directe tel par exemple un échangeur décrit dans le document FR-2 484 619. Cet échangeur est destiné à réchauffer un fluide, par exemple un liquide alimentaire ou bien encore du raisin fraichement vendangé et éventuellement pressé et/ou éraflé, qui entre par une seconde entrée 28 pour ressortir par une seconde sortie 30. Le second compresseur 24 permet au fluide frigorigène du second circuit 4 de rentrer dans le deuxième échangeur 22 sous forme gazeuse à haute pression (HP) et de circuler dans le deuxième échangeur 22 à contre courant par rapport au liquide alimentaire entrant par la seconde entrée 28 et sortant par la seconde sortie 30. Le fluide frigorigène du second circuit 4 ressort du deuxième échangeur 22 sous forme essentiellement liquide, à haute pression. Il est ensuite détendu dans le second détendeur 26.

Un troisième échangeur 32 se trouve au coeur du système représenté sur la figure 1 et fait le lien entre le premier circuit 2 et le second circuit 4. Ce troisième échangeur reçoit, d'une part, le fluide frigorigène du premier circuit 2 en sortie du premier compresseur 16 et, d'autre part, le fluide frigorigène du second circuit 4 en sortie du second détendeur 26. Au sein de ce troisième échangeur 32, le fluide frigorigène du premier circuit 2 va au moins partiellement se condenser et céder des calories au fluide frigorigène du second circuit 4 qui va quant à lui au moins partiellement s'évaporer.

Ainsi si le système décrit ci-dessus vient prendre place dans un chai, on peut refroidir du jus de raisin dans le premier échangeur 6 ou bien assurer une thermorégulation de cuves de vinification pour la fermentation alcoolique des vins blancs (ou rosés). Ce premier échangeur 6 peut aussi éventuellement servir à la production d'eau glacée qui est alors stockée pour être utilisée ultérieurement pour réaliser un refroidissement. Si la demande frigorifique en production d'eau glacée pour le chai ou bien pour le refroidissement de la vendange en post macération est trop faible, alors l'aéroévaporateur 12 peut être utilisé pour assurer un complément. La mise en route de l'aéroévaporateur 12 peut être commandée par un automate (non représenté) en fonction par exemple de la température du fluide entrant au niveau de la première entrée 8 dans le premier échangeur 6. Les vannes trois voies 20 et le motoventilateur 14 sont également régulées par l'automate en fonction des besoins de l'installation.

Les calories récupérées au niveau du premier circuit 2 sont transmises au second circuit 4 par l'intermédiaire du troisième échangeur 32. Le fluide frigorigène de ce second circuit 4 est utilisé pour réchauffer le liquide alimentant le deuxième échangeur 22 par la seconde entrée 28. Ce liquide peut être une vendange mais il peut aussi s'agir d'eau chaude qui peut alors être stockée dans un ballon.

Dans ce fonctionnement, le fluide frigorigène évaporé dans le premier échangeur 6 (ou dans l'aéroévaporateur 12) est comprimé par le premier compresseur 16 et véhiculé dans le troisième échangeur 32 où il cède sa chaleur latente et sensible au fluide frigorigène du second circuit 4 par condensation. Le fluide frigorigène du second circuit 4 une fois évaporé au sein du troisième échangeur 32 est comprimé par le second compresseur 24 et dirigé vers le deuxième échangeur 22 dans lequel il va se condenser (au moins partiellement). Ce changement d'état permet de céder au fluide entrant par la seconde entrée 28 les calories récupérées lors du refroidissement dans le premier échangeur 6.

Ce système est réversible et pourrait également être utilisé pour le refroidissement du liquide entrant dans le deuxième échangeur 22 et ainsi donc pour le réchauffement du liquide circulant dans le premier échangeur 6, par l'intermédiaire par exemple de valves quatre voies d'inversion de cycle (non représentées).

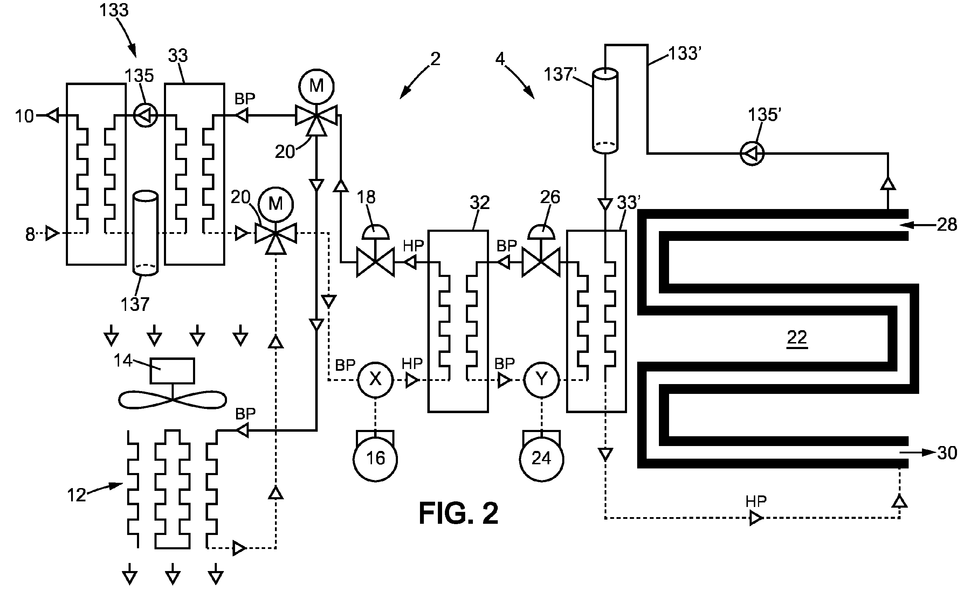

La figure 2 illustre une variante de réalisation du système de la figure 1 et reprend les mêmes références que celles portées sur la figure 1 pour désigner des éléments similaires.

Les différences entre le système de la figure 2 et celui de la figure 1 sont que les échanges de chaleur entre le fluide frigorigène du premier circuit 2 et du second circuit 4 ne se font plus directement avec les liquides alimentaires (ou similaires) mais par l'intermédiaire d'un autre fluide. Le fonctionnement reste le même sauf qu'un circuit d'échange supplémentaire est prévu, d'une part, du côté du premier échangeur 6 et, d'autre part, du côté du deuxième échangeur 22.

Ainsi, on remarque la présence sur la figure 2 d'un quatrième échangeur 33 qui réalise un échange thermique entre le fluide frigorigène du premier circuit 2 et un fluide caloporteur d'un circuit intermédiaire 133. Le fluide caloporteur utilisé dans ce circuit intermédiaire 133 est par exemple de l'eau ou de l'alcali. Il circule dans ce circuit intermédiaire 133 grâce notamment à une pompe 135 (ou similaire, par exemple un thermosiphon).

On remarque également la présence dans le circuit intermédiaire 133 d'un accumulateur 137 qui sert de thermostat et/ou de réserve d'énergie dans le système. En effet, le fait de garder une quantité d'eau froide permet de stocker des frigories (1 frigorie = -1 calorie) qui peuvent être utilisées lors d'une demande importante de froid.

Du côté de l'échangeur 22 on remarque une structure similaire. Un cinquième échangeur 33' est prévu entre l'échangeur 22 et le second circuit 4. Un circuit intermédiaire 133' avec une pompe 135' (ou similaire) et un accumulateur 137' est également avantageusement prévu. Le fluide prévu dans ce circuit est de préférence de l'eau ou de l'alcali (mais d'autres fluides, de préférence liquides, tout comme dans le circuit intermédiaire 133, peuvent bien entendu être envisagés ici). Dans ce circuit intermédiaire 133', l'accumulateur 137' est appelé à stocker de l'eau chaude afin de pouvoir par exemple rapidement chauffer une vendange arrivant dans un chai.

La figure 2 montre une forme de réalisation avec un circuit intermédiaire au niveau du premier échangeur 6 et du deuxième échangeur 22. On pourrait toutefois prévoir, en fonction des besoins, de n'avoir qu'un seul circuit intermédiaire (ou zéro, comme sur la figure 1). Ainsi par exemple si les besoins en froid sont plus importants dans une installation, on favorisera la présence du circuit intermédiaire 133 avec l'accumulateur 137 d'eau froide.

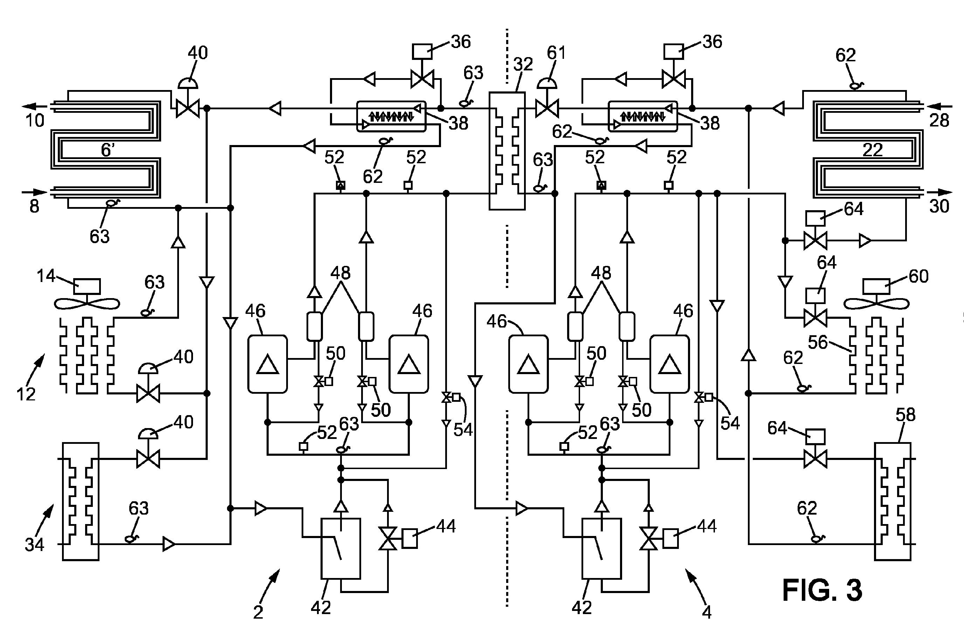

La figure 3 illustre une autre forme de réalisation de l'invention. Le système illustré sur cette figure est plus complet que ceux illustrés sur les figures 1 et 2 et les références utilisées sur ces figures sont alors reprises pour désigner des éléments similaires de la forme de réalisation de la figure 3 (et 4).

On retrouve ainsi sur la figure 3 un premier circuit 2 et un second circuit 4. Le premier circuit 2 comporte un premier échangeur 6' avec une première entrée 8 et une première sortie 10. Il comporte également un aéroévaporateur 12 coopérant avec un motoventilateur 14. Une première différence avec la forme de réalisation de la figure 1 concerne la nature du premier échangeur 6'. Il s'agit ici, dans l'exemple non limitatif représenté, d'un échangeur tubulaire à détente directe qui peut reprendre les caractéristiques de l'échangeur décrit dans le document FR-2 484 619. Une autre différence de ce premier circuit 2 par rapport à celui de la figure 1 concerne les moyens mis en oeuvre pour comprimer le fluide frigorigène et le détendre. En outre, la circulation dans le circuit est réalisée également d'une autre manière.

Le second circuit 4 comporte également un deuxième échangeur 22 qui est par exemple de même nature que le deuxième échangeur 22 de la figure 1, avec une seconde entrée 28 et une seconde sortie 30.

Enfin, on retrouve dans cette seconde forme de réalisation proposée ici un troisième échangeur 32 permettant de réaliser des échanges thermiques entre le premier circuit 2 et le second circuit 4. L'échange réalisé est uniquement thermique et il n'y a aucun mélange ou contact direct entre les fluides frigorigènes des deux circuits qui peuvent être (les fluides) de natures différentes.

La variante de réalisation propose de comporter en outre un sixième échangeur 34 se présentant par exemple sous la forme d'un échangeur à plaques (la description comportant déjà un quatrième échangeur décrit en référence à la figure 2, l'échangeur portant la référence 34 est appelé ici sixième échangeur pour éviter une confusion bien que, comme il apparaît immédiatement à l'homme du métier, le système décrit ici et représenté sur la figure 3 ne comporte pas six échangeurs). Cet échangeur est utilisé par exemple pour une production d'eau glacée et peut être associée à des moyens de stockage d'eau glacée (non représentés). Il est monté en parallèle de l'aéroévaporateur 12 et du premier échangeur 6' sur le premier circuit 2 de fluide frigorigène.

Ce sixième échangeur 34 permet alors d'augmenter l'élasticité de la production d'eau glacée et prévient d'une forte demande frigorifique ou calorifique ponctuelle du second circuit 4.

En aval du troisième échangeur 32, le premier circuit 2 présente un détendeur de sous refroidissement 36 et un échangeur de sous refroidissement 38. Du fluide condensé par le troisième échangeur 32 est prélevé entre le troisième échangeur 32 et l'échangeur de sous refroidissement 38. Le fluide prélevé passe par le détendeur de sous refroidissement 36 et passe ensuite dans l'échangeur de sous refroidissement 38 de manière à refroidir encore le fluide frigorigène du premier circuit 2 qui est envoyé vers le premier échangeur 6' et/ou l'aéroévaporateur 12 et le sixième échangeur 34.

À chaque échangeur (premier échangeur 6', aéroévaporateur 12 et sixième échangeur 34) est associé à chaque fois un détendeur, par exemple un détendeur électronique 40. Ce dernier réalise à chaque fois la détente du fluide frigorigène mais permet aussi de réguler, en lien avec un automate de régulation non représenté sur la figure, le remplissage du dispositif d'échange correspondant.

Le fluide frigorigène sortant du premier échangeur 6' et/ou de l'aéroévaporateur 12 et/ou du sixième échangeur 34 et de la dérivation du circuit entre le troisième échangeur 32 et l'échangeur de sous refroidissement 38 est collecté dans une bouteille anti-coup 42 de liquide. Un circuit comportant une vanne 44 à ouverture cyclique permet de renvoyer de l'huile d'un fond de la bouteille anti-coup 42 vers des compresseurs à débit variable 46.

Il est proposé ici d'avoir deux compresseurs à débit variable 46 montés en parallèle entre la bouteille anti-coup 42 et le troisième échangeur 32. Des moyens sont prévus pour éviter la migration d'huile vers le troisième échangeur 32. En aval de chaque compresseur à débit variable 46, on dispose ainsi par exemple un piège à huile 48 associé à une vanne de by-pass cyclique 50, cette dernière permettant un retour d'huile par différence de pression.

Pour la régulation du système, on a représenté sur la figure 3 des capteurs de pression 52 qui fournissent des informations à l'automate de commande et de régulation non représenté. En outre, une vanne d'équilibrage 54 est prévue entre l'aval et l'amont des compresseurs à débit variable 46. Il s'agit par exemple d'une vanne électromagnétique.

On retrouve dans le second circuit 4 beaucoup d'éléments similaires aux éléments décrits pour le premier circuit 2. Les mêmes références seront reprises pour ces éléments similaires.

Ainsi par exemple, le fluide frigorigène du second circuit 4, en aval du troisième échangeur 32 passe dans une bouteille anti-coup 42 associée à une vanne 44 à ouverture cyclique pour renvoyer de l'huile du fond de la bouteille vers l'aspiration de deux compresseurs à débit variable 46. Les compresseurs à débit variable 46 du second circuit 4 sont montés en parallèle entre la bouteille anti-coup 42 et des échangeurs décrits ci-après.

Alors que le second circuit 4 de la figure 1 ne comporte qu'un seul échangeur, il est prévu ici trois échangeurs alimentés par le second circuit 4. Il y a le deuxième échangeur 22 évoqué plus haut. Il y a également un second aérocondenseur 56 qui permet la condensation du fluide frigorigène du second circuit 4 dans le cas notamment où la demande thermique au niveau du deuxième échangeur 22 et/ou d'un septième échangeur 58 décrit ci-après est insuffisante ou bien encore si la demande de froid au niveau du premier circuit 2 est trop importante (de même que pour le sixième échangeur, on appelle ici l'échangeur portant la référence 58 "septième échangeur" bien que le système représenté ne comporte pas sept échangeurs). Ce second aérocondenseur 56 échange des calories avec l'extérieur et est associé à un motoventilateur 60 qui pulse de l'air sur cet échangeur.

Le septième échangeur 58 évoqué plus haut est un échangeur monté en parallèle avec le deuxième échangeur 22 et le second aérocondenseur 56. Il s'agit par exemple d'un échangeur à plaques destiné à une production d'eau chaude centralisée. Ce septième échangeur 58 alimente par exemple un ballon d'eau chaude formant ainsi une réserve d'énergie qui peut être utilisée par exemple lors d'une forte demande thermique ponctuelle.

Au niveau du second circuit 4, on trouve de manière classique pour un circuit thermodynamique des moyens de compression de fluide frigorigène (les compresseurs à débit variable 46) ainsi que des moyens pour détendre le fluide frigorigène. Ces derniers moyens comportent ici un détendeur électronique 61 disposé juste en amont du troisième échangeur 32 et permettant de réguler le remplissage de l'évaporateur du troisième échangeur 32. En amont encore de ce détendeur électronique 61, et en aval des échangeurs (deuxième échangeur 22, second aérocondenseur 56 et septième échangeur 58) du second circuit 4, on retrouve un autre détendeur de sous refroidissement 36 et un autre échangeur de sous refroidissement 38. Ainsi le fluide frigorigène du second circuit 4 est refroidi avant de passer dans le détendeur électronique 61. Le fluide passant par le détendeur de sous refroidissement 36 puis par l'échangeur de sous refroidissement 38 est envoyé directement dans la bouteille anti-coup 42, sans passer par le détendeur électronique 61 ni par le troisième échangeur 32.

De même que dans le premier circuit, pour la régulation du système, on retrouve au niveau du second circuit 4 des capteurs de pression 52 ainsi qu'une vanne d'équilibrage 54 pour l'équilibrage des pressions. Des sondes de mesure 62 du sous refroidissement sont avantageusement prévues au niveau des condenseurs des échangeurs (deuxième échangeur 22, second aérocondenseur 56 et septième échangeur 58) du second circuit 4 et des sondes de mesure 62 de surchauffe peuvent avantageusement être utilisées pour commander, via un automate, l'ouverture du détendeur de sous refroidissement 36 correspondant.

Une sonde de température 63 est avantageusement prévue sur le premier circuit 2 juste en aval du troisième échangeur 32 pour permettre à l'automate de régulation (non représenté) de commander le démarrage de l'un ou des deux compresseurs à débit variable du second circuit 4.

Il est également avantageusement prévu au niveau de chaque échangeur (deuxième échangeur 22, second aérocondenseur 56 et septième échangeur 58) de ce circuit d'avoir une autre vanne d'équilibrage 64 des pertes de charge d'un condenseur à l'autre. On retrouve, comme pour le premier circuit 2, à nouveau une vanne d'équilibrage 54 au niveau des compresseurs à débit variable 46.

Diverses sondes de température 63 peuvent être utilisées pour aider l'automate (non représenté) à régler l'ouverture des diverses vannes du système ainsi que les détendeurs électroniques 40 et/ou 61.

Le système de la figure 3 permet ainsi de réaliser des échanges thermiques au sein d'un chai en réalisant par exemple un refroidissement au sein du premier échangeur 6' et un chauffage au niveau du deuxième échangeur 22.

Lors d'une vendange par exemple, on apporte successivement des quantités de raisins à un chai. Le raisin arrive à température ambiante, généralement comprise entre 15°C et 25°C. Dans un processus de thermovinification, il est prévu d'amener le raisin vendangé à une température de l'ordre de 70°C (75°C maximum). Le raisin macère alors à chaud pendant environ 2 heures et doit être refroidi, en dessous de 50°C, généralement jusque vers 25°C. Ces diverses valeurs numériques sont données ici, et par la suite à titre purement illustratif et non limitatif. Ces valeurs sont bien entendu déterminées en fonction du raisin, de la région viticole et sont choisies par le vigneron en fonction de son expérience et du résultat qu'il souhaite obtenir.

Il est alors avantageux d'utiliser l'un des systèmes ci-dessus pour réaliser le chauffage et le refroidissement des raisins. Le premier chauffage, c'est-à-dire le chauffage de la première quantité de raisin arrivant au chai, peut être réalisé à l'aide de moyens auxiliaires. Dans le cas des figures 1 et 2, un chauffage "classique" peut être utilisé pour cette première quantité de raisins fraichement vendangés. À la fin de la macération de cette première quantité de raisins, il convient, d'une part, de la refroidir et, d'autre part, de réchauffer une deuxième quantité de raisins qui est arrivée entre temps au chai, la vendange du raisin étant réalisée en continu. Le chauffage de la deuxième quantité de raisin peut alors être réalisé en même temps que le refroidissement de la première quantité de raisin. Ainsi, au rendement près du dispositif, les calories cédées par le refroidissement de la première quantité de raisin servent à réchauffer la deuxième quantité de raisin. Au fur et à mesure de la vendange, des quantités de raisin peuvent être ainsi traitées en mettant à profit le refroidissement d'une quantité de raisin pour chauffer une quantité de raisin arrivée ultérieurement dans le chai.

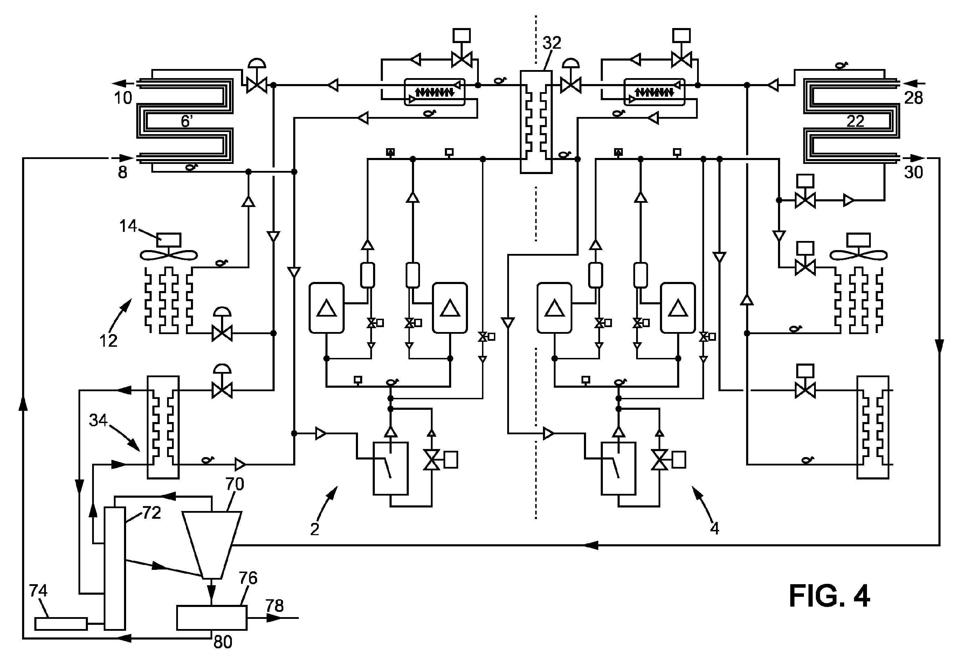

La figure 4 illustre une application du système illustré sur la figure 3 dans un procédé de vinification mettant en oeuvre une "flash détente", c'est-à-dire un procédé tel que décrit par exemple dans le document FR-2 712 147. Il est alors prévu de mettre des raisins vendangés sous vide, rapidement après la vendange, de manière à provoquer une vaporisation d'une partie des raisins. La pression est de l'ordre de 10³ à 10⁴ Pa. Avantageusement, cette mise sous vide est précédée d'un chauffage rapide des raisins, par exemple à une température allant jusqu'à 100° C.

Sur la figure 4, on a représenté une enceinte 70 au sein de laquelle il est prévu de mettre des raisins sous vide.

On prévoit par exemple d'introduire les raisins fraichement vendangés dans l'entrée 28 du deuxième échangeur 22 afin de les réchauffer. En sortie de cet échangeur (sortie 30), les raisins sont conduits à l'enceinte 70 et au moins partiellement vaporisés. Les vapeurs de raisins sont ensuite condensées au sein d'un condenseur 72. Dans la forme de réalisation représentée, il est prévu ici de refroidir le condenseur 72 à partir du sixième échangeur 34. Une pompe à vide 74 est prévue pour maintenir une faible pression dans le condenseur 72 et dans l'enceinte 70. Cette pompe à vide 74 agit ainsi également comme pompe pour la circulation des vapeurs issues de la vendange.

Le jus sortant du condenseur 72 et aussi directement de l'enceinte 70 où tout le jus n'est pas entièrement vaporisé ainsi que les rafles, peaux et autres sont ensuite collectés dans un dispositif d'égouttage et de pressurage 76. Les déchets solides sortent du dispositif d'égouttage et de pressurage 76 par une première sortie 78 tandis que le jus, liquide, sort par une seconde sortie 80 reliée à l'entrée 8 du premier échangeur 6'. Le jus est ainsi encore refroidi avant d'être envoyé en cuve de fermentation (en aval de la première sortie 10 du premier échangeur 6').

Les systèmes thermodynamiques proposés ici présentent un rendement global bien supérieur aux systèmes traditionnels qui consistent à générer de l'eau chaude avec une chaudière et de faire circuler cette eau dans un échangeur tubulaire pour chauffer la vendange et à générer de l'eau froide par une tour aéroréfrigérante. En effet, grâce à une condensation et une évaporation d'un fluide frigorigène (que l'on peut également qualifier de caloporteur) directement dans un échangeur, il est possible de profiter à la fois de la chaleur sensible et de la chaleur latente tout en minimisant les pertes thermiques.

Les systèmes proposés présentent un autre avantage. Les échangeurs, pour des performances équivalentes, sont de taille sensiblement plus réduite que celle des échangeurs utilisés couramment.

Un autre avantage par rapport aux systèmes traditionnels est l'entretien réduit du matériel. Il est presque inexistant et en tout cas bien moindre que l'entretien d'une chaudière et d'un système de tour aéroréfrigérante.

Les systèmes proposés fonctionnent de préférence entièrement à l'électricité. Ainsi, il n'y a pas de problème de stockage de combustible.

Le prix de revient et les coûts d'exploitation d'un système selon la présente invention sont globalement très avantageux. En effet, un tel système permet de récupérer de l'énergie dégagée par la fermentation alcoolique du vin, de l'énergie présente dans l'air extérieur et de l'énergie générée par la thermovinification. Le système est en partie autoalimenté énergétiquement.

Comme l'illustre la figure 4 un système selon la présente invention est particulièrement bien adapté pour gérer les besoins simultanés en froid et en chaud qui existent dans un dispositif de "flash-détente" utilisé pour la thermovinification. Dans ce cas, on peut notamment récupérer les calories générées par la condensation des vapeurs de "flash-détente".

Enfin, un système selon l'invention permet de réaliser deux manipulations en une seule, le réchauffement d'une quantité de raisin étant réalisé simultanément au refroidissement d'une autre quantité de raisin.

Bien entendu, la présente invention ne se limite pas aux formes de réalisation non limitatives décrites en références aux figures annexées et aux variantes évoquées mais elle concerne toute forme de réalisation à la portée de l'homme du métier dans le cadre des revendications ci-après.

## Revendications

1. Système thermodynamique pour une thermovinification pour permettre d'un côté le refroidissement d'une première composition obtenue à partir de raisins et d'un autre côté le réchauffement d'une seconde composition obtenue à partir de raisins, ledit système comportant un premier échangeur (6, 6') permettant de refroidir la première composition et un deuxième échangeur (22) permettant de réchauffer la seconde composition,
**caractérisé en ce qu'**il comporte en outre :
- un premier circuit (2) de fluide frigorigène comportant un détendeur (18 ; 40) et un compresseur (16 ; 46) et alimentant le premier échangeur (6, 6'),
- un second circuit (4) de fluide frigorigène distinct du premier circuit (2) comportant un détendeur (26 ; 61) et un compresseur (24 ; 46) et alimentant le deuxième échangeur (22), et
- un troisième échangeur (32) thermique entre le premier circuit (2) et le second circuit (4).

2. Système thermodynamique selon la revendication 1, **caractérisé en ce que** le fluide frigorigène circulant dans le premier circuit (2) est de nature différente du fluide frigorigène circulant dans le second circuit (4).

3. Système thermodynamique selon l'une des revendications 1 ou 2, **caractérisé en ce que** le premier circuit alimente le premier échangeur (6) par l'intermédiaire d'un quatrième échangeur et d'un circuit d'eau.

4. Système thermodynamique selon l'une des revendications 1 à 3, **caractérisé en ce que** le second circuit alimente le deuxième échangeur (22) par l'intermédiaire d'un cinquième échangeur et d'un circuit d'eau.

5. Système thermodynamique selon l'une des revendications 1 à 4, **caractérisé en ce que** le premier circuit (2) de fluide frigorigène alimente également un sixième échangeur (34) thermique destiné à la production d'eau glacée.

6. Système thermodynamique selon l'une des revendications 1 à 5, **caractérisé en ce que** le premier circuit (2) de fluide frigorigène alimente également un évaporateur (12) sur air extérieur.

7. Système thermodynamique selon l'une des revendications 1 à 6, **caractérisé en ce que** le second circuit (4) de fluide frigorigène alimente également un septième échangeur (58) thermique destiné à la production d'eau chaude.

8. Système thermodynamique selon la revendication 7, **caractérisé en ce que** le septième échangeur (58) thermique est un échangeur à plaques.

9. Système thermodynamique selon l'une des revendications 1 à 8, **caractérisé en ce que** le second circuit (4) de fluide frigorigène alimente également un aérocondenseur (56).

10. Système thermodynamique selon l'une des revendications 1 à 9, **caractérisé en ce que** le premier échangeur (6 ; 6') est un échangeur tubulaire à détente directe.

11. Système thermodynamique selon l'une des revendications 1 à 10, **caractérisé en ce que** le deuxième échangeur (22) est un échangeur tubulaire à détente directe.

12. Système thermodynamique selon l'une des revendications 1 à 11, **caractérisé en ce que** le premier circuit (2) et le second circuit (4) comportent chacun un échangeur secondaire (38).

13. Système thermodynamique selon la revendication 5, **caractérisé en ce qu'**il comporte en outre un dispositif permettant de mettre sous vide une composition obtenue à base de raisins pour provoquer une vaporisation partielle de ladite composition, **en ce que** ledit dispositif de mise sous vide est alimenté par le deuxième échangeur (22), **en ce que** le système comporte en outre un condenseur pour la condensation des vapeurs obtenues par vaporisation, ledit condenseur étant relié au sixième échangeur.

14. Procédé de vinification dans lequel des quantités de raisins vendangés arrivent dans un chai ou similaire, puis sont éventuellement foulées, puis chauffées pour ensuite macérer à chaud avant d'être refroidies rapidement,
**caractérisé en ce que** le chauffage et le refroidissement de quantités de raisins sont réalisés avec un système thermodynamique selon l'une des revendications 1 à 13, et **en ce que** le chauffage d'au moins une quantité de raisins est réalisé pendant le refroidissement d'une autre quantité de raisins arrivée plus tôt dans le chai avec des calories récupérées par le refroidissement de ladite quantité de raisin.

## Patentansprüche

1. Thermodynamisches System für eine thermische Weinbereitung, um einerseits das Kühlen einer ersten aus Weintrauben erhaltenen Zusammensetzung und andererseits das Erwärmen einer zweiten aus Weintrauben erhaltenen Zusammensetzung zu erlauben, wobei das System aufweist
einen ersten Übertrager (6, 6'), der das Kühlen der ersten Zusammensetzung erlaubt und
einen zweiten Übertrager (22), der das Erwärmen der zweiten Zusammensetzung erlaubt,
**dadurch gekennzeichnet, dass** es weiterhin aufweist:
einen ersten Kältemittelkreislauf (2) mit einem Druckminderer (18; 40) und einem Kompressor (16; 46), der den ersten Übertrager (6, 6') versorgt,
einen zweiten Kältemittelkreislauf (4), der von dem ersten Kreislauf (2) verschieden ist mit einem Druckminderer (26; 61) und einem Kompressor (24; 46), der den zweiten Übertrager (22) versorgt, und
einen dritten Wärmeübertrager (32) zwischen dem ersten Kreislauf (2) und dem zweiten Kreislauf (4).

2. Thermodynamisches System nach Anspruch 1,
**dadurch gekennzeichnet,**
**dass** das in dem ersten Kreislauf (2) zirkulierende Kältemittel von unterschiedlicher Art ist als das in dem zweiten Kreislauf (4) zirkulierende Kältemittel.

3. Thermodynamisches System nach einem der Ansprüche 1 oder 2,
**dadurch gekennzeichnet,**
**dass** der erste Kreislauf den ersten Übertrager (6) über einen vierten Übertrager und einen Wasserkreislauf versorgt.

4. Thermodynamisches System nach einem der Ansprüche 1 bis 3,
**dadurch gekennzeichnet,**
**dass** der zweite Kreislauf den zweiten Übertrager (22) über einen fünften Übertrager und einen Wasserkreislauf versorgt.

5. Thermodynamisches System nach einem der Ansprüche 1 bis 4,
**dadurch gekennzeichnet,**
**dass** der erste Kältemittelkreislauf (2) auch einen sechsten Wärmeübertrager (34) versorgt, der zur Herstellung von kaltem Wasser bestimmt ist.

6. Thermodynamisches System nach einem der Ansprüche 1 bis 5,
**dadurch gekennzeichnet,**
**dass** der erste Kältemittelkreislauf (2) auch einen Verdampfer (12) über Außenluft versorgt

7. Thermodynamisches System nach einem der Ansprüche 1 bis 6,
**dadurch gekennzeichnet,**
**dass** der zweite Kältemittelkreislauf (4) auch einen siebten Wärmeübertrager (58) versorgt, der zur Herstellung von warmem Wasser bestimmt ist.

8. Thermodynamisches System nach Anspruch 7,
**dadurch gekennzeichnet,**
**dass** der siebte Wärmeübertrager (58) ein Plattenübertrager ist.

9. Thermodynamisches System nach einem der Ansprüche 1 bis 8,
**dadurch gekennzeichnet,**
**dass** der zweite Kältemittelkreislauf (4) auch einen Luftkondenser (56) versorgt.

10. Thermodynamisches System nach einem der Ansprüche 1 bis 9,
**dadurch gekennzeichnet,**
**dass** der erste Übertrager (6, 6') ein Röhrenübertrager zur direkten Druckminderung ist.

11. Thermodynamisches System nach einem der Ansprüche 1 bis 10,
**dadurch gekennzeichnet,**
**dass** der zweite Übertrager (22) ein Röhrenübertrager zur direkten Druckminderung ist.

12. Thermodynamisches System nach einem der Ansprüche 1 bis 11,
**dadurch gekennzeichnet,**
**dass** der erste Kreislauf (2) und der zweite Kreislauf (4) jeweils einen zweiten Übertrager (38) aufweisen.

13. Thermodynamisches System nach Anspruch 5,
**dadurch gekennzeichnet,**
**dass** es außerdem eine Einrichtung aufweist, die es erlaubt, eine auf Grundlage von Weintrauben erhaltenen Zusammensetzung zu vakuumieren, um ein partielles Verdampfen der Zusammensetzung herbeizuführen, dass die Einrichtung zum Vakuumieren von dem zweiten Übertrager (22) versorgt wird,
**dass** das System außerdem einen Kondenser zum Kondensieren der durch Verdampfung erhaltenen Dämpfe aufweist, wobei der Kondenser mit dem sechsten Übertrager verbunden ist.

14. Verfahren zur Weinbereitung,
bei dem Mengen an gelesenen Weintrauben in einem Weinlager oder Ähnlichem ankommen und dann gegebenenfalls zerstampft werden, dann erwärmt werden, um anschließend warm eingeweicht zu werden, bevor sie rasch abgekühlt werden,
**dadurch gekennzeichnet,**
**dass** das Erwärmen und das Abkühlen der Mengen der Weintrauben verwirklicht werden mit einem thermodynamischen System nach einem der Ansprüche 1 bis 13, und
**dass** das Erwärmen von wenigstens einer Menge an Weintrauben während des Abkühlens einer anderen Menge an Weintrauben, die früher in dem Weinlager angekommen ist, mit der Wärmemenge verwirklicht wird, die durch das Abkühlen der Menge von Weintrauben zurückgewonnen wird.

## Claims

1. Thermodynamic system for thermovinification for allowing, on the one side, the cooling of a first composition obtained from grapes and, on the other side, the heating of a second composition obtained from grapes, the said system comprising a first exchanger (6, 6') allowing the first composition to be cooled, and a second exchanger (22) allowing the second composition to be heated,
**characterised in that** it further comprises:
- a first circuit (2) with refrigerant fluid, comprising a pressure reducer (18; 40) and a compressor (16; 46) and feeding the first exchanger (6, 6'),
- a second circuit (4) with refrigerant fluid, separate from the first circuit (2), comprising a pressure reducer (26; 61) and a compressor (24; 46) and feeding the second exchanger (22), and
- a third heat exchanger (32) between the first circuit (2) and the second circuit (4).

2. Thermodynamic system according to claim 1, **characterised in that** the refrigerant fluid circulating in the first circuit (2) is of a different nature to the refrigerant fluid circulating in the second circuit (4).

3. Thermodynamic system according to any one of claims 1 or 2, **characterised in that** the first circuit feeds the first exchanger (6) by the intermediary of a fourth exchanger and a water circuit.

4. Thermodynamic system according to any one of claims 1 to 3, **characterised in that** the second circuit feeds the second exchanger (22) by the intermediary of a fifth exchanger and a water circuit.

5. Thermodynamic system according to any one of claims 1 to 4, **characterised in that** the first circuit (2) of refrigerant fluid likewise feeds a sixth heat exchanger (34) intended for the production of chilled water.

6. Thermodynamic system according to any one of claims 1 to 5, **characterised in that** the first circuit (2) of refrigerant fluid likewise feeds an outside air evaporator (12).

7. Thermodynamic system according to any one of claims 1 to 6, **characterised in that** the second circuit (4) of refrigerant fluid likewise feeds a seventh heat exchanger (58) intended for the production of hot water.

8. Thermodynamic system according to claim 7, **characterised in that** the seventh heat exchanger (58) is a plate heat exchanger.

9. Thermodynamic system according to any one of claims 1 to 8, **characterised in that** the second circuit (4) of refrigerant fluid likewise feeds an air condenser (56).

10. Thermodynamic system according to any one of claims 1 to 9, **characterised in that** the first exchanger (6; 6') is a tubular exchanger with direct reduction.

11. Thermodynamic system according to any one of claims 1 to 10, **characterised in that** the second exchanger (22) is a tubular exchanger with direct reduction.

12. Thermodynamic system according to any one of claims 1 to 11, **characterised in that** the first circuit (2) and the second circuit (4) each comprise a secondary exchanger (38).

13. Thermodynamic system according to claim 5, **characterised in that** it further comprises a device allowing for the putting under vacuum of a composition obtained from grapes in order to incur partial vaporisation of the said composition, **in that** the said device for imposing vacuum is fed by the second exchanger (22), and **in that** the system further comprises a condenser for the condensation of the vapours obtained by vaporisation, the said condenser being connected to the sixth exchanger.

14. Vinification process in which quantities of grapes picked arrive in a storehouse or similar, then trodden if appropriate, then heated in order subsequently to be macerated when hot before being cooled rapidly,
**characterised in that** the heating and cooling of quantities of grapes is carried out with a thermodynamic system according to any one of claims 1 to 13, and in which the heating of at least a quantity of the grapes is carried out during the cooling of another quantity of grapes which arrived earlier with the calories recovered from the cooling of the said quantity of grapes.
